# NEUE EUROPÄISCHE PATENTSCHRIFT

(11) **EP 0 223 134 B2**
(45) Veröffentlichungstag und Bekanntmachung des Hinweises auf die Entscheidung über den Einspruch: **19.07.1995**
(45) Hinweis auf die Patenterteilung: 16.08.1989
(21) Anmeldenummer: 86115136.3
(22) Anmeldetag: 31.10.1986
(51) Int. Cl.: A01B 29/04, A01B 49/06

(54) **Bodenwalze**
Landroller
Rouleau agraire

(30) Priorität: 09.11.1985 DE 3539821
(43) Veröffentlichungstag der Anmeldung: 27.05.1987
(73) Patentinhaber: Amazonen-Werke H. Dreyer GmbH & Co. KG, D-49205 Hasbergen (DE)
(72) Erfinder: Dreyer, Heinz, Dipl.-Ing. Univ. Dr. agr., D-4507 Hasbergen (DE); Grosse-Scharmann, Franz, Dr., D-2872 Hude i.O. (DE)
(74) Vertreter: Grünecker, Kinkeldey, Stockmair & Schwanhäusser Anwaltssozietät

(56) Entgegenhaltungen:
- EP-A- 0 133 710
- EP-A- 0 160 612
- DE-A- 2 317 969
- DE-A- 3 314 761
- DE-A- 3 319 660
- DE-A- 3 336 313
- DE-A- 3 432 547
- FR-A- 1 225 024
- FR-A- 2 347 863
- US-A- 1 336 819
- US-A- 2 713 373
- US-A- 2 848 278
- US-A- 2 888 085
- US-A- 3 225 839
- US-A- 3 339 643
- TOP AGRAR, Heft 2, 1982, Seite 99, Münster; "Wiesenwalze aus Lkw Reifen"

## Beschreibung

Die Erfindung betrifft eine Bodenwalze nach dem Oberbegriff des Anspruchs 1.

Eine derartige Bodenwalze ist aus US-A 3 339 643 bekannt. Die einzelnen Gummihohlreifen sind bei dieser bekannten Bodenwalze unmittelbar nebeneinander angeordnet und bilden keinen Abstand zueinander. Die Laufflächen der einzelnen Gummihohlreifen bilden einen im wesentlichen durchgehenden, starren Walzenmantel.

Aus der Zeitschrift "Top Agrar" Heft 2, 1982, Seite 99 ist eine ebenfalls mit Gummireifen ausgestattete Bodenwalze bekannt.

Diese für das Wiesenwalzen vorgesehene Walze besteht aus mehreren auf einem zentralen Tragrohr nebeneinander aufgefädelten LKW-Reifen. In dieser Veröffentlichung ist erwähnt, daß die Reifen noch walken können und man so u.U. sogar einen gewissen Selbstreinigungseffekt der LKW-Reifen erzielt. Dieses mag durchaus bei dem Einsatz der Walze als Wiesenwalze zum Walzen von Wiesen der Fall sein.

Wird jedoch diese Walze zum Walzen von Saatbetten bzw. in Bodenbearbeitungskombinationen hinter Bodenbearbeitungsgeräten zur Saatbettbereitung eingesetzt, so reicht diese Walkarbeit bei den LKW-Reifen zur Selbstreinigung jedoch keines-falls aus. Des weiteren wird sich Boden zwischen den einzelnen Reifen setzen und immer weiter nach innen in Richtung des zentralen Tragrohres wandern, so daß bereits nach sehr kurzer Zeit beim Einsatz dieser Walze auf Ackerböden beispielsweise hinter Bodenbearbeitungsgeräten, sich der Innenraum des jeweiligen Reifens sehr schnell mit Erde füllt. Diese Erde füllt den gesamten Hohlraum innerhalb der Reifen aus, so daß die Reifen nicht mehr walken können. Somit wird also auch kein Selbstreinigungseffekt mehr erzielt. Darüber hinaus wird die Walze zur Saatbertbereitung viel zu schwer und falls eine derartige Walze in Bodenbearbeitungskombinationen eingesetzt wird, kann die Bodenbearbeitungskombination über die Dreipunkthydraulik des die Bodenbearbeitungskombination tragenden Schleppers nicht mehr ausgehoben werden.

Durch die DE-OS 3 336 313 ist eine kombinierte Gerätekombination, bestehend aus einer Bodenbearbeitungsmaschine und einer hinter der Bodenbearbeitungsmaschine angeordneten Nachlaufwalze bekannt geworden. Bei dieser bekannten Gerätekombination sind vor der Bodenbearbeitungsmaschine in einer Reihe nebeneinander mehrere Luftreifen aus einer gemeinsamen und durchgehenden Welle gelagert, wobei sich die Luftreifen ungefähr über die gesamte Arbeitsbreite der Gerätekombination erstrecken. Wie Versuche nun gezeigt haben, muß zur Saatbettbereitung mit einem äußerst niedrigen Luftdruck in diesen Luftreifen gearbeitet werden. Hierbei hat sich nun überraschenderweise gezeigt, daß anhaftende Erde bzw. sich zwischen den benachbarten Reifen festsetzende Erde die Reifen von den Felgen drücken, so daß Erde schon bereits nach kurzer Einsatzzeit der Gerätekombination in das Innere der Luftreifen gelangt. Schon nach kurzer Zeit hat sich der gesamte Innenraum dieser Luftreifen mit Erdboden gefüllt. Hierdurch wird die Walkarbeit der Reifen verhindert, so daß kein Selbstreinigungseffekt der Reifen mehr gegeben ist. Einerseits wird sich dann ein immer größer werdender Erdring um die Reifen herum aufbauen und außerdem entsteht ein äußerst schlechtes Saatbett. Falls bereits das Saatgut vor diesen Reifen in den Boden eingebracht worden ist, nehmen diese Reifen die oberste Bodenschicht und teilweise das Saatgut mit hoch, so daß das bereits im Boden abgelegte Saatgut wieder aufgenommen wird.

Der Erfindung liegt nun die Aufgabe zugrunde, mit einfachsten Mitteln eine Bodenwalze vor allem für die Saatbettbereitung zu schaffen, die sich selbst reinigt und selbst betriebssicher ist und ein feinkrümeliges sowie ebenes Saatbett hinterläßt.

Diese Aufgabe wird erfindungsgemäß mit einer Bodenwalze gemäß den Merkmalen des Anspruchs 1 gelöst.

Infolge der Anordnung der Gummihohlreifen mit Hilfe eines Distanzrings wird sichergestellt, daß die Walkarbeit der Gummihohlreifen ausreichend groß ist, so daß ein Selbstreinigungseffekt eintritt. Dadurch, daß der Distanzring die Gummihohlreifen an den Seitenwandungen abdichtet, wird eine hohe Betriebssicherheit garantiert, weil dadurch verhindert wird, daß Erde in das Innere der Walze eindringt.

Bei einer Ausführungsform der Erfindung ist vorgesehen, daß die Distanzringe auf einem den Tragkörper bildenden Rohr aufgeschoben sind. Hierdurch ergibt sich eine äußerst einfache und stabile Konstruktion der Walze. Um eine Torsion bzw. eine Verdrehung der Gummihohlreifen auf dem Tragrohr um die Drehachse des Tragrohrs zu verhindern, ist es des weiteren vorteilhaft, wenn zumindest einige Distanzringe am Rohr befestigt sind. Hierdurch behalten die Gummihohlreifen auch in Drehrichtung ihre Lage jeweils zueinander bei.

Die Distanzringe können auch als einen U-förmigen Querschnitt aufweisende Distanzringe ausgebildet sein, wobei dann die Seitenwände der Gummihohlreifen mit den Schenkeln des Distanzringes verbunden sind. Die Distanzringe können auch Bestandteile von Autoreifenfelgen sein und es können die Gummihohlreifen von innen an die Wulstringe der Felgen angepreßt sein. Hierdurch ist es möglich, drucklose Gummihohlreifen zu verwenden, wobei dann auch sichergestellt ist, daß zwischen die Gummihohlreifen gelangende Erde dieselben nicht von den Feigen drücken kann. In einer Ausführungsform ist dabei vorgesehen, daß innerhalb der Gummihohlreifen ein Festklemmring angeordnet ist, der den Wulst der Gummihohlreifen fest gegen den Außenrand der Felge drückt, so daß noch zuverlässig sichergesellt wird, daß die Gummireifen nicht von den Felgen gedrückt werden können.

Auch ist es möglich, die Gummireifen auf den Felgen mit Schrauben oder Nieten festzuklemmen. Diese Befestigungsart wird man vor allem dann bevorzugen, wenn bereits gebrauchte und alte Gummihohlreifen auf Felgen nebeneinander zu einer Bodenwalze zusammengestellt werden. Eine besonders billige Bodenwalze ergibt sich dadurch, daß man als Gummihohlreifen gebrauchte PKW, vorzugsweise Gürtelreifen verwendet. Hierbei haben vor allem die Gürtelreifen den Vorteil, daß sie eine ausgezeichnete Walkarbeit ermöglichen, so daß sich diese Gummihohlreifen dann besonders gut von selbst reinigen.

Bei allen Ausführungsformen weisen die Distanzringe einen kleineren Durchmesser als die Gummihohlreifen auf, damit die Bodenwalze auf den Gummihohlreifen und nicht auf den Distanzringen aufliegt, wenn die Gummihohlreifen bei ihrer Auflage auf dem Boden aufgrund der Walkarbeit in Richtung der Walzenachse zusammengedrückt werden.

Im folgenden werden Ausführungsformen der Erfindung anhand der Zeichnung erläutert. Hierbei zeigen
Fig. 1 eine Gerätekombination mit einer unterhalb einer Sämaschine angeordneten erfindungsgemäß ausgebildeten Gummiwalze,
Fig. 2 eine erfindungsgemäße Bodenwalze ebenfalls in der Ansicht von hinten und im Teilschnitt.
Fig. 3 eine weitere Bodenwalze in der Ansicht von hinten und im Teilschnitt,
Fig. 4 noch eine weitere Bodenwalze ebenfalls in der Ansicht und im Teilschnitt.

Die Bodenwalze 1 ist als Laufwerk für eine Sämaschine 2 ausgebildet. Der Vorratsbehälter 3 der Sämaschine 3 ist im westentlichen direkt oberhalb der Bodenwalze 1 angeordnet. Hinten der Bodenwalze 1 ist über die Tragarme 4 die Scharhalteschiene 5 befestigt, an der in zwei hintereinander liegenden Querreihen die Säschare 6 angelenkt sind, die das von den Dosierelementen der Sämaschine 2 dosierte Saatgut im Boden ablegen. Die Dosierelemente der Sämaschine 2 werden über die Gelenkwelle 7 von der Bodenwalze 1 angetrieben. Die Sämaschine 2 mit der Bodenwalze 1 ist über die Kupplungselemente 8 hinter der als Kreiseiegge 9 ausgebildeten Bodenbearbeitungsmaschine angeordnet. Diese aus der Bodenwalze 1, der Sämaschine 2 und der Kreiselegge 9 bestehende Gerätekombination kann über die vordere Dreipuntkupplungselemente 10 der Kreiselegge an die Dreipunkthubeinrichtung eines Schleppers angeschlossen werden.

Im folgenden werden verschiedene Ausführungsformen von Bodenwalzen beschrieben, die sowohl als Laufwerk als Sämaschinen als auch von Nachlaufwalzen hinter Bodenbearbeitungsgeräten verwendet werden können.

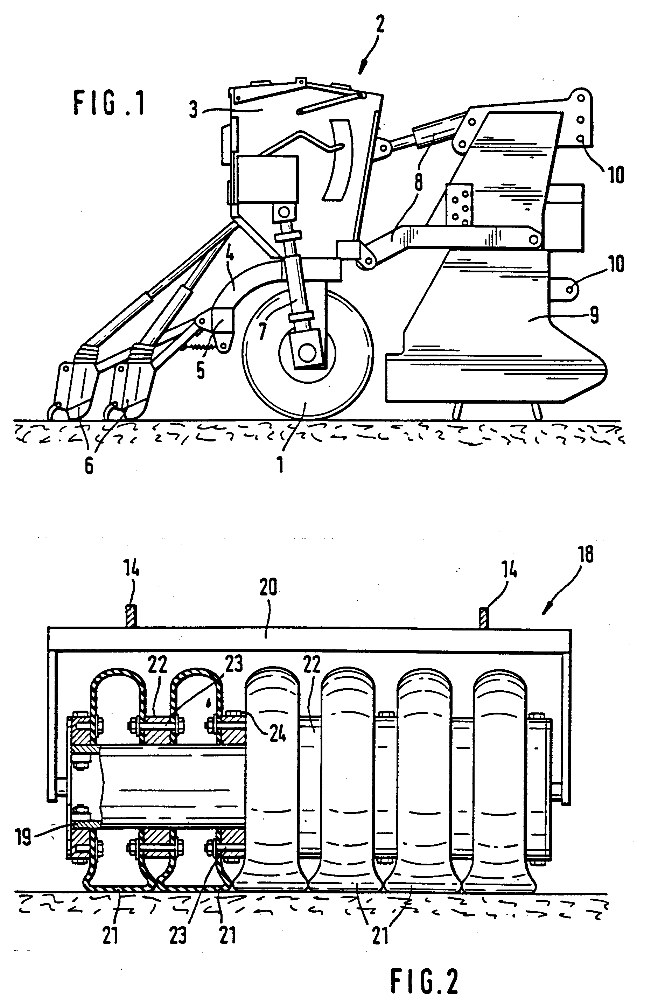

Die Bodenwalze 18 gemäß Fig. 2 weist das zentrale Tragrohr 19 auf, welches in dem Tragrahmen 20 drehbar gelagert ist. Dieser Tragrahmen 20 weist Anschlußelemente 14 für den Anschluß der Bodenwalze 18 an eine Sämaschine oder an eine Bodenbeareitungsmaschine auf. Auf dem zentralen Tragrohr 19 sind in einem Abstand zueinander die Gummireifen 21 nebeneinander angeordnet. Zwischen den einzelnen Gummireifen sind die als Ringe 22 ausgebildeten Distanzelemente auf dem Tragrohr 19 angeordnet. Diese Ringe 22 weisen einen wesentlich geringeren Außendurch messer als die Reifen 21 auf. Die Gummireifen 21 sind möglichst weit innen über die als Schrauben 23 ausgebildeten Befestigungselemente jeweils miteinander verschraubt. Weiterhin ist jeder zweite Ring 22 über die Schrauben 24 mit dem Tragrohr 19 verbunden, so daß die Reifen 21 über die Ringe 22 drehfest mit dem Tragrohr 19 verbunden sind.

Da die Gummireifen in einem Abstand zueinander angeordnet sind, können die Gummireifen beim Abrollen auf dem Boden sehr stark walken, so daß einerseits eine vorzügliche Krümelung und Andruckwirkung bei der Saatbettbereitung erreicht wird und andererseits gleichzeitig ein vorzüglicher Selbstreinigungseffekt der Reifen 21 erreicht wird, so daß die Gummireifen sich selbst reinigen. Diese sehr gute Walkarbeit wird noch dadurch unterstrützt, daß innerhalb der Gummireifen kein Überbruck gegenüber dem äußeren Luftdruck herrscht.

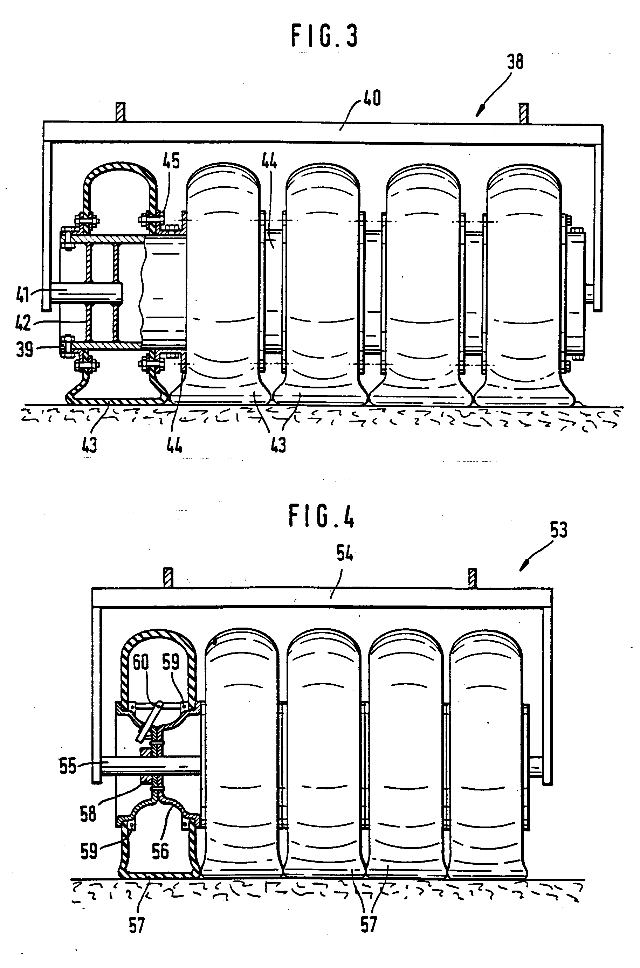

Die Bodenwalze 38 gemäß Fig. 3 weist das zentrale Tragrohr 39 auf, welches in dem Tragrahmen 40 über die Wellenstummel 41, die in dem in dem Tragrohr 39 eingeschweißten Platten 42 eingeschweißt sind, drehbar angeordnet ist. Auf dem Tragrohr 39 sind die als gebrauchte PKW-Reifen ausgebildeten Gummireifen 43 in einem Abstand zueinander angeordnet. Zwischen den Gummireifen 43 ist jeweils ein im Querschnitt U-förmiger Ring 44 angeordnet, der als Distanzelement dient, um die Reifen 43 auf Abstand zueinander zu halten. Die Ringe 44 sind über Schrauben drehfest mit dem Tragrohr 39 verbunden. Weiterhin sind an den Ringen 44 jeweils die Reifen 43 mit den Schrauben 45 fest verbunden. Hierbei sind jeweils soviel Schrauben 45 auf dem Umfang des Ringes 44 bzw. der Gummireifen vorgesehen, so daß sichergestellt ist, daß keine Erde von außen in den Innenraum der Gummireifen 43 eindringen kann. Somit sind also die Gummireifen 43 zu einem in sich geschlossenen Walzenkörper miteinander verbunden.

Die Bodenwalze 53 gemäß Fig. 4 weist einen Tragrahmen 54 auf, an dem die Welle 55 drehbar gelagert ist. Auf dieser Welle 55 sind nebeneinander die auf den Felgen 56 angeordneten Gummireifen, die als Terra- bzw. Niederdruckreifen ausgebildet sind, nebeneinander angeordnet. Über die Feststellringe 58 sind die Felgen 56 bzw. die Gummireifen 57 gegen axiales Verschieben gesichert.

Innerhalb der Gummireifen sind die beiden Festklemmringe 59 angeordnet. Diese beiden Festklemmringe werden über einen Spannmechanismus 60 gegen die Wülste der Gummireifen 57 gedrückt, so daß die Gummireifen 57 durch die Festklemmringe 59 auf den Felgen 56 fest geklemmt werden. Hierdurch wird sichergestellt, daß, wenn kein Überdruck innerhalb der Luftreifen vorhanden ist, die Gummireifen nicht von den Felgen 56 heruntergedrückt werden, sondern auch bei intensiver Walkarbeit der Reifen 57 ihre vorgesehene Lage auf den Felgen 56 behalten. Durch das Festklemmen der Gummireifen 57 auf den Felgen 56 durch die als Befestifungselemente ausgebildeten Festklemmringe 59 wird sichergestellt, daß die Reifen nicht von den Felgen heruntergedrückt werden können und auch unter schwierigsten Einsatzbedingungen keine Erde in das Reifeninnere gelangt.

## Patentansprüche

1. Bodenwalze, bestehend aus einem Tragkörper und nebeneinander angeordneten drucklosen Gummihohlreifen (21, 43, 57), die sich mit den Innenrändern ihrer Seitenwände auf dem Tragkörper abstützen und axial auf dem Tragkörper festgelegt sind, **dadurch gekennzeichnet**, daß zwischen benachbarten Gummihohlreifen ein die Gummihohlreifen im unbelasteten Zustand auf Abstand haltender Distanzring (22, 44, 56) angeordnet ist und die Seitenwandungen der Gummihohlreifen mit dem dazwischen befindlichen Distanzring abdichtend gegen Eindringen von Erde in das Reifeninnere verbunden sind und daß der Distanzring (22, 44, 56) einen kleineren Durchmesser als die Gummireifen (21, 43, 57) aufweist.

2. Bodenwalze nach Anspruch 1, **dadurch gekennzeichnet,** daß die Distanzringe (22, 44) auf einem den Tragkörper bildenden Rohr (19, 39) aufgeschoben sind.

3. Bodenwalze nach Anspruch 2, **dadurch gekennzeichnet,** daß jeder Distanzring (44) einen U-förmigen Querschnitt aufweist und die Seitenwände der Gummihohlreifen mit den U-Schenkeln des Distanzringes verbunden sind.

4. Bodenwalze nach Anspruch 3, **dadurch gekennzeichnet,** daß die Distanzringe (44) am Rohr befestigt sind.

5. Bodenwalze nach mindestens einem der Ansprüche 1 bis 4, **dadurch gekennzeichnet,** daß die Distanzringe Bestandteil von Autoreifen-Felgen (56) sind und die Gummihohlreifen von innen an die Wulstringe der Felgen angepreßt sind.

6. Bodenwalze nach mindestens einem der Ansprüche 1 bis 5, **dadurch gekennzeichnet,** daß die äußere Seitenwand der äußeren Reifen der Walze seitlich abgedichtet sind.

7. Bodenwalze nach wenigstens einem der vorangegangenen Ansprüche, **dadurch gekennzeichnet,** daß innerhalb der Gummireifen (57) ein Festklemmring (59) angeordnet ist.

8. Bodenwalze nach Anspruch 5, **dadurch gekennzeichnet,** daß die Gummireifen auf den Felgen (56) mit Schrauben und Nieten festgeklemmt sind.

## Claims

1. Ground roller, comprising a supporting body and pressureless hollow rubber tyres (21, 43, 57), which are situated adjacent one another, said tyres being supported on the supporting body by means of the inside edges of their lateral walls and being axially secured on the supporting body, characterised in that a spacer ring (22, 44, 56) is disposed between adjacent hollow rubber tyres and keeps the hollow rubber tyres spaced apart in the unloaded state, and the lateral walls of the hollow rubber tyres are sealingly connected to the spacer ring situated therebetween so as to prevent earth from entering the interior of the tyre, and in that the spacer ring (22, 44, 56) has a smaller diameter than the rubber tyres (21, 43, 57).

2. Ground roller according to claim 1, characterised in that the spacer rings (22, 44) are slidingly disposed on a tube (19, 39) which forms the supporting body.

3. Ground roller according to claim 2, characterised in that each spacer ring (44) has a U-shaped cross-section, and the lateral walls of the hollow rubber tyres are connected to the legs of the U-shaped spacer ring.

4. Ground roller according to claim 3, characterised in that the spacer rings (44) are mounted on the tube.

5. Ground roller according to at least one of claims 1 to 4, characterised in that the spacer rings form part of automotive tyre rims (56), and the hollow rubber tyres are pressed from internally against the bead rings of the rims.

6. Ground roller according to at least one of claims 1 to 5, characterised in that the outer lateral wall of the outer tyres of the roller is laterally sealed.

7. Ground roller according to at least one of the preceding claims, characterised in that a clamping ring (59) is disposed internally of the rubber tyres (57).

8. Ground roller according to claim 5, characterised in that the rubber tyres are clamped on the rims (56) by means of screws and rivets.

## Revendications

1. Rouleau agraire ou rouleau de sol formé d'un corps de support et de pneumatiques juxtaposés (21, 43, 57) qui s'appuient par les bords intérieurs de leurs flancs sur le corps de support et sont fixés axialement sur celui-ci, rouleau caractérisé en ce qu'entre les pneumatiques voisins, il est prévu un anneau d'écartement (22, 44, 58) maintenant écartés les pneumatiques à l'état non mis en pression et les flancs des pneumatiques et l'anneau d'écartement qui se trouve entre eux est relié de manière étanche pour éviter la pénétration de terre à l'intérieur des pneumatiques les anneaux d'écartement (22, 44, 58) ont un diamètre plus petit que les pneumatiques (21, 43, 57).

2. Rouleau selon la revendication 1, caractérisé en ce que les anneaux d'écartement (22, 44,) sont emmanchés sur un tube (19, 39) formant le corps de support.

3. Rouleau selon la revendication 2, caractérisé en ce que chaque anneau d'écartement (44) a une section en forme de U et les flancs des pneumatiques sont reliés aux branches en U de l'anneau d'écartement.

4. Rouleau selon la revendication 3, caractérisé en ce que les anneaux d'écartement (44) sont fixés sur le tube.

5. Rouleau selon au moins l'une des revendications 1 à 4, caractérisé en ce que les anneaux d'écartement font partie de jantes (56) de roues d'automobiles et les pneumatiques sont pressés de l'intérieur contre les talons des jantes.

6. Rouleau selon au moins l'une des revendications 1 à 5, caractérisé en ce que les flancs extérieurs des pneumatiques extérieurs du rouleau sont fermés de manière étanche latéralement.

7. Rouleau selon au moins l'une des revendications précédentes, caractérisé par un anneau de serrage (59) prévu à l'intérieur des pneumatiques (57).

8. Rouleau selon la revendication 5, caractérisé en ce que les pneumatiques sont serrés sur les jantes (56) à l'aide de vis et de rivets.
